# EUROPÄISCHE PATENTSCHRIFT

(11) **EP 1 882 019 B1**
(45) Veröffentlichungstag und Bekanntmachung des Hinweises auf die Patenterteilung: **20.04.2011**
(21) Anmeldenummer: 06724457.4
(22) Anmeldetag: 20.04.2006
(51) Int. Cl.: C09B 67/04, C09B 67/10, C09B 67/48

(54) **FEINTEILIGES AZOPIGMENT UND VERFAHREN ZU SEINER HERSTELLUNG**
FINELY DIVIDED AZO DYE AND PROCESS FOR PRODUCING THE SAME
PIGMENT AZOIQUE A FINES PARTICULES ET PROCEDE DE REALISATION ASSOCIE

(30) Priorität: 06.05.2005 DE 102005021159
(43) Veröffentlichungstag der Anmeldung: 30.01.2008
(73) Patentinhaber: Clariant Produkte (Deutschland) GmbH, 65929 Frankfurt am Main (DE)
(72) Erfinder: WEBER, Joachim, CH-4153 Reinach (CH); MEDER, Magali, 65779 Kelkheim (DE); SCHWEIKART, Karl-Heinz, 65760 Eschborn (DE); WILKER, Gerhard, 64546 Mörfelden-Walldorf (DE); ALFTER, Frank, 65812 Bad Soden (DE)
(74) Vertreter: Hütter, Klaus
(86) Internationale Anmeldenummer: PCT/EP2006/003625
(87) Internationale Veröffentlichungsnummer: WO 2006/119846

(56) Entgegenhaltungen:
- EP-A- 1 411 091
- EP-A1- 0 894 831
- EP-A2- 1 167 461
- WO-A-03/052000
- WO-A-2004/094534
- WO-A-2005/028564
- WO-A-2005/111151
- B. STENGEL-RUTKOWSKI; H.-J. METZ: "Gelb und wetterecht: Ein neues Monoazopigment" FARBE + LACK, Bd. 106, 31. Dezember 2000 (2000-12-31), Seiten 38-42, XP008070637
- DATABASE WPI Week 200334 Derwent Publications Ltd., London, GB; AN 2003-358615 XP002405119 -& JP 2003 084116 A (TOYO INK MFG CO LTD) 19. März 2003 (2003-03-19)

## Beschreibung

Beim Einsatz von Pigmenten zum Färben von hochmolekularen organischen Materialien werden hohe Anforderungen an die anwendungstechnischen Eigenschaften der Pigmente gestellt, wie hohe Farbstärken, leichte Dispergierbarkeit, hohe Buntheit (Chroma) und Reinheit des Farbtons und gute Licht- und Wetterechtheit. Wünschenswert ist eine möglichst universelle Einsetzbarkeit zum Färben von verschiedenen hochmolekularen Systemen wie Kunststoffen sowie wässrigen und lösemittelhaltigen Druckfarben und Lacken. Sowohl bei Lacken als auch bei Druckfarben geht der Trend hin zu hohen Pigmentkonzentrationen in der Anreibung, daher werden hochpigmentierte Lack- und Druckfarbenkonzentrate oder Mahlgüter (millbase) mit dennoch niedriger Viskosität gefordert, ebenso muss die Viskosität des fertigen Lackes oder Druckfarbe anwendungsgerecht sein. Bei Druckfarben wird eine hohe Transparenz verlangt, in Lacksystemen sind einwandfreie Überlackierechtheiten und Lösemittelechtheiten, Beständigkeit gegen Alkali und Säure, und insbesondere im Falle von Metalliclackierungen hohe Transparenz und brillante Farbtöne gewünscht. Im Falle der Kunststoffeinfärbung wird hohe Ausblutechtheit, Hitzestabilität und gute Dispergierbarkeit verlangt, was z.B. in hohen Farbstärken zum Ausdruck kommt. Außerdem ist eine möglichst universelle Einsetzbarkeit in verschiedenen Systemen, beispielsweise in wässrigen und lösemittelhaltigen Systemen erwünscht.

Weitere Einsatzgebiete von Pigmenten sind beispielsweise elektrophotographische Toner und Entwickler, Tinten wie beispielsweise Ink Jet Tinten oder e-inks, Farbfilter, oder Pulverlacke, die jeweils ihre zusätzlichen, speziellen Anforderungen haben.

Bei Color Filtern (Farbfilter) wird mittels Durchlicht von roten, grünen und blauen Bildpunkten ein Vollfarbbild erzeugt. Neben den "transmissive" (or "non-emissive") (= Durchlicht) Color Filtern gibt es auch "reflective" Color Filter, die dann gegebenenfalls auch mit gelb, cyan und magenta Bildpunkten arbeiten können. Bei den Color Filtern unterscheidet man zwischen AM-(active matrix) und PM-(passive matrix) LCD (liquid crystal display) Color Filtern, wobei den TFT (thin film transistor)-LCD Color Filtern eine besondere Bedeutung zukommt.

Darüber hinaus können Color Filter auch bei MEMS (DMD) (= Micro-Electro-Mechanical Systems, Digital Micro Mirror Device), bei e-paper sowie weiteren geeigneten Display Technologien Einsatz finden.
Color Filter Displays finden in den unterschiedlichsten electro-optischen Systemen Anwendung, wie z.B. in Bildschirmen von Desk-Top Monitoren, in Computerbildschirmen, Bildschirmen von tragbaren Computern (Laptops, portable computers), PDA (Personal Digital Assistants) sowie in Mobiltelefon-, Videokamera-, GPS- (global positioning systems) und sonstigen Monitoren, sowie generell in Flüssigkristall- und Charge-Coupled-Devices, plasma displays oder in electroluminiscenten und anderen Displays. Letztgenannte können z.B. active (twisted nematic) oder passive (supertwisted nematic) ferroelektrische Displays sein oder z.B. Licht emittierende Dioden.
Zudem finden Farbfilter Einsatz in Flat Panel Displays (Flachbildschirmen), die zunehmend die herkömmlichen Kathodenstrahl-Fernsehbildschirme ersetzen, oder die generell als Anzeigetafel in beliebiger Größe für unbewegte und bewegte Information genutzt werden können.

Ein typischer LCD-Color-Filter Aufbau kann wie folgt schematisch beschrieben werden: Zwischen zwei Glasplatten befindet sich eine dünne Schicht mit Flüssigkristallen. Die obere Glasplatte hat neben einer Reihe von weiteren funktionalen Komponenten auf der äußeren Oberfläche die entsprechenden Bildpunkte, z.B. Rot, Grün, Blau (R,G,B). Diese Bildpunkte sind für einen besseren Kontrast schwarz umrandet, nach außen sind die R, G, B -Bildpunkte durch eine geeignete Schutzschicht gegen Umwelteinflüsse, wie Kratzer, geschützt. Die untere Glasplatte enthält noch weitere funktionale Komponenten wie z.B. ITO (Indium Tin Oxide) und TFT (Thin Film Transistors), die unter anderem zum Ansteuern der einzelnen Bildpunkte dienen.

Wird durch die untere Glasplatte geeignetes Licht (z.B. linear polarisiertes Licht einer bestimmten Wellenlänge) geschickt, so kann nun der Flüssigkristall durch elektronisches Ansteuern auf "hell" oder "dunkel" gestellt werden (oder auf jede beliebige Zwischenstufe).
Dementsprechend werden die Color Filter-Bildpunkte mit Licht versorgt und für das menschliche Auge ergibt sich ein entsprechendes auf R, G, B aufbauendes, farbiges, bewegtes oder unbewegtes Bild.

Die EP-A-0 894 831 offenbart Chinoxalin-monoazo-acetarylid-Pigmente, unter anderen ein Pigment der Formel (I)

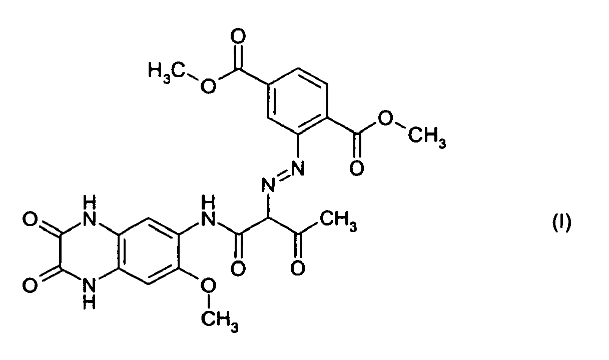

In dem offenbarten Herstellungsverfahren wird im ersten Schritt das Monoazopigment durch Azokupplung hergestellt und als Presskuchen isoliert. In einem zweiten Schritt wird in einem dipolar aprotischen Lösemittel ein Lösemittelfinish durchgeführt. Beispiel 1 offenbart als Lösemittel N-Methylpyrrolidon. Durch Röntgenspektroskopie kann gezeigt werden, dass bei diesem Lösemittelfinish die ursprüngliche nach der Azokupplung vorliegende alpha-Kristallphase in die beta-Kristallphase umgewandelt wird. Der Lösemittelfinish ergibt ein grobteiliges Monoazopigment der Formel (I) in der beta-Kristallphase.

Die EP,A,1,167,461 beschreibt die Herstellung der beta-Form des Pigmentgelb 213 in einem Mikroreaktor.

Die Kristallphasen alpha und beta des Monoazopigments der Formel (I) zeichnen sich durch folgende charakteristische Linien im Röntgenpulverdiagramm aus (Tabelle 1, Cu-K-alpha-Strahlung, doppelter Beugungswinkel 2Theta-Werte in Grad mit einer Fehlergrenze von +/- 0,2 Grad, Netzebenenabstände d in Å, relative Intensität in Prozent):

| **Tabelle 1** | | | | | | |
|---|---|---|---|---|---|---|
| **alpha** | | | | **beta** | | |
| 2Theta | d | rel. Int. | | 2Theta | d | rel. Int. |
| 3,3 | 26,8 | 39 | | 6,4 | 13,9 | 7 |
| 8,0 | 11,1 | 100 | | 7,5 | 11,8 | 7 |
| 8,8 | 10,0 | 55 | | 9,2 | 9,6 | 86 |
| 9,9 | 8,9 | 23 | | 10,5 | 8,4 | 4 |
| 11,0 | 8,0 | 16 | | 12,8 | 6,9 | 16 |
| 12,4 | 7,1 | 12 | | 15,0 | 5,9 | 15 |
| 13,3 | 6,7 | 11 | | 16,0 | 5,5 | 7 |
| 14,7 | 6,0 | 14 | | 16,8 | 5,3 | 5 |
| 16,1 | 5,5 | 31 | | 17,2 | 5,2 | 13 |
| 16,7 | 5,3 | 20 | | 17,5 | 5,1 | 5 |
| 18,7 | 4,7 | 13 | | 19,3 | 4,6 | 20 |
| 19,9 | 4,5 | 21 | | 19,6 | 4,5 | 24 |
| 22,6 | 3,9 | 18 | | 21,2 | 4,2 | 6 |
| 24,4 | 3,7 | 31 | | 21,6 | 4,1 | 12 |
| 26,4 | 3,4 | 67 | | 21,8 | 4,1 | 13 |
| 32,4 | 2,8 | 11 | | 22,8 | 3,9 | 5 |
| 37,2 | 2,4 | 11 | | 23,9 | 3,7 | 2 |
| | | | | 25,3 | 3,5 | 4 |
| | | | | 26,0 | 3,4 | 19 |
| | | | | 26,6 | 3,4 | 100 |
| | | | | 27,0 | 3,3 | 14 |
| | | | | 27,8 | 3,2 | 7 |
| | | | | 28,9 | 3,1 | 5 |
| | | | | 30,1 | 3,0 | 4 |
| | | | | 32,0 | 2,8 | 6 |
| | | | | 32,3 | 2,8 | 6 |
| | | | | 33,0 | 2,7 | 3 |

Ein grobteiliges Monoazopigment der Formel (I) in der beta-Kristallphase zeichnet sich durch hohe Deckkraft und durch gute Fließfähigkeit in Lacken aus. In verschiedenen Anwendungen sind jedoch Eigenschaften gesucht, die durch ein grobteiliges Pigment nicht erzielt werden können, beispielsweise führt ein grobteiliges Pigment in der Ink Jet Tinte zum Verstopfen der Düsen und führt nicht zu der im Ink Jet Druck geforderten hohen Transparenz. Ebenso ist eine hohe Deckkraft prohibitiv für den Einsatz eines Pigments in Druckfarben.

Es bestand der Bedarf nach einem feinteiligen, transparenten und gut dispergierbaren Monoazopigment der Formel (I) in der beta-Kristallphase und nach einem Verfahren zu seiner Herstellung.

Es wurde gefunden, dass das Monoazopigment der Formel (I) überraschenderweise in seiner beta-Kristallphase sowie in einer feinteiligen, transparenten und gut dispergierbaren Form erhältlich ist, wenn die alpha-Kristallphase einer Salzknetung unterworfen wird.

Gegenstand der Erfindung ist ein feinteiliges Monoazopigment der Formel (I) in der beta-Kristallphase, dadurch gekennzeichnet, dass mindestens 90 Gew.-% der Teilchen einen Stokes-äquivalenten Durchmesser von kleiner gleich 130 nm, bevorzugt von kleiner gleich 100 nm aufweisen.

Das erfindungsgemäße feinteilige Monoazopigment der Formel (I) zeichnet sich durch eine gute Dispergierbarkeit aus. Dies zeigt sich bei der Ermittlung des Stokes-äquivalenten Durchmessers in der Dispersion. Die gute Dispergierbarkeit und der niedrige Durchmesser der Teilchen führen zu einer hohen Transparenz. Die Transparenz kann mit dem Kontrastverhältnis C = Ys/Yw beschrieben werden, wobei Ys der Hellbezugswert über schwarz und Yw der Hellbezugswert über weiß ist, und Y einer der drei Normfarbwerte X/Y/Z ist, die die Basis für die verschiedenen Farbsysteme bilden. Bei dem erfindungsgemäßen Monoazopigment der Formel (I) in der beta-Kristallphase liegen die Werte des Kontrastverhältnisses C = Ys/Yw bei kleiner gleich 0,22, bevorzugt kleiner gleich 0,20, insbesondere kleiner gleich 0,18.

Gegenstand der Erfindung ist auch ein Verfahren zur Herstellung von feinteiligem Monoazopigment der Formel (I) in der beta-Kristallphase, dadurch gekennzeichnet, dass ein Monoazopigment der Formel (I) in der alpha-Kristallphase einer Salzknetung unterworfen wird.
Die alpha-Kristallphase des Monoazopigments der Formel (I) kann beispielsweise durch Azokupplung, wie sie in der EP-A-0 894 831 beschrieben ist, hergestellt werden.

Die Salzknetung erfolgt, indem das Monoazopigment der Formel (I) in der alpha-Kristallphase mit einer organischen Flüssigkeit und mit einem kristallinen Salz in Form einer knetbaren, hochviskosen Paste geknetet wird.

Als Salz kommen Salze mono-, bi- oder trivalenter Metallionen, wie beispielsweise Alkali- oder Erdalkalimetallionen, mit anorganischen Säuren, beispielsweise Salzsäure, Schwefelsäure oder Phosphorsäure, oder mit organischen Säuren mit 1 bis 6 Kohlenstoffatomen, beispielsweise Ameisensäure und Essigsäure, in Frage. Bevorzugte Salze sind Natriumformiat; Natrium- oder Calciumacetat; Natriumcitrat; Kaliumnatriumtartrat; Natrium-, Kalium-, Calcium-, Zink- oder Aluminiumchlorid; Natrium- oder Aluminiumsulfat; Calciumcarbonat; oder Mischungen dieser Salze, und insbesondere Natriumchlorid. Die Salze werden meist in größerer Menge eingesetzt, beispielsweise in mindestens 1- bis 10-facher, bevorzugt 2- bis 8-facher Menge, insbesondere 3- bis 6-facher Menge, bezogen auf das Gewicht des Monoazopigments. Auch größere Mengen können eingesetzt werden, sind jedoch unwirtschaftlich.
Handelsübliches Salz kann grobkörnig sein und kann vor dem Einsatz bei der Salzknetung durch eine Mahlung zerkleinert werden.

Die organische Flüssigkeit kommt in solchen Mengen zum Einsatz, dass das Mahlgut eine zähe, teigige Masse bildet. Die eingesetzten Mengen liegen erfahrungsgemäß zwischen der 0,05- bis 0,8-fachen Menge, bevorzugt zwischen der 0,1- bis 0,4-fachen, insbesondere zwischen der 0,12 bis 0,35-fachen Menge, bezogen auf das Gewicht der Monoazopigment-Salz-Mischung. Als organische Flüssigkeiten kommen solche in Frage, in denen das Monoazopigment und das Salz möglichst unlöslich sind. Beispiele für solche organischen Flüssigkeiten sind Alkohole mit 4 bis 10 C-Atomen, wie beispielsweise Butanole, wie n-Butanol, isoButanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Di-, Tri- oder Tetraethylenglykol, Propylenglykol, Di-, Tri- oder Tetrapropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykol-monoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-glykolester; oder Phthalsäuredi- oder Benzoesäurealkylester, wie Benzoesäure-C₁-C₄-alkylester oder C₁-C₁₂-Alkylphthalsäurediester; cyclische Ester, wie Caprolacton; Nitrile, wie Acetonitril, aliphatische oder aromatische Amine, wie beispielsweise Dimethylanilin oder Diethylanilin; halogenierte aliphatische oder aromatische Kohlenwasserstoffe wie Tetrachlorkohlenstoff, Tri- oder Tetrachlorethylen; oder durch Alkoxy, Nitro, Cyano oder Halogen substituiertes Benzol, beispielsweise Anisol, Nitrobenzol, Dichlorbenzole, Trichlorbenzole oder Benzonitril; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan; sowie Mischungen dieser organischen Flüssigkeiten. Bevorzugt werden Glykole und Glykolether, wie Ethylenglykol, Diethylenglykol oder Butylglykol, Dimethylformamid, N-Methylpyrrolidon, Dimethylsulfoxid, insbesondere Diethylenglykol, N-Methylpyrrolidon und Dimethylsulfoxid verwendet. Es ist möglich aber generell nicht erwünscht, eine geringe Menge Wasser einzusetzen, die nicht mehr als 25 Gew.-% der gesamten Flüssigkeit einschließlich des Wassers, das im eingesetzten Monoazopigment enthalten sein kann, betragen sollte.

Bei der Salzknetung können auch Säuren zum Einsatz kommen, insbesondere Säuren mit einem pK-Wert kleiner als 4,8. Bevorzugt können Phosphorsäure, Carbonsäuren, wie Essigsäure, Dodecylbenzolsulfonsäure und insbesondere Schwefelsäure eingesetzt werden.
Die Knetdauer richtet sich nach den zu erzielenden Anforderungen und nach dem Zeitpunkt des Umschlags der Kristallphase, sie kann von 30 Minuten bis 48 Stunden oder länger betragen, meist liegt sie im Bereich von 1 bis 24, insbesondere von 2 bis 8 Stunden.

Als Kneter kommen übliche kontinuierliche und diskontinuierliche, ein- oder mehrarmige Kneter in Betracht, bevorzugt zweiarmige diskontinuierliche Kneter, die möglichst hohe Scherkräfte auf die Knetmasse ausüben. Übliche Schaufelformen sind die Doppelmulden- (auch Sigma- oder Z-Schaufel genannt) oder die Mastikatorschaufel.
Die Temperatur bei der Knetung soll über dem Schmelzpunkt und unter dem Siedepunkt der organischen Flüssigkeit liegen.
Bevorzugt wird bei einer Temperatur von -20 bis 150°C, insbesondere 50 bis 120°C, mit der 4- bis 6-fachen Menge, bezogen auf das Gewicht des Monoazopigments, an Natriumchlorid als Salz und der 1- bis 2-fachen Menge, bezogen auf das Gewicht des Monoazopigments, an Diethylenglykol als organische Flüssigkeit geknetet.

Während der Knetung kann, falls erforderlich, durch nachträgliche Zugabe von organischer Flüssigkeit und/oder Salz die zähe Konsistenz der Knetmasse eingestellt bzw. konstant gehalten werden. Die Konsistenz der Knetmasse kann sich während des Knetens beispielsweise durch Verdampfen der organischen Flüssigkeit oder durch das Mahlen des Monoazopigments zu kleineren Korngrößen ändern.

Vor der Knetung kann prinzipiell eine trockene Vorvermahlung von Monoazopigment mit Salz, wie sie beispielsweise in der EP-A-1 411 091 beschrieben ist, durchgeführt werden.

Das bei der Salzknetung eingesetzte Salz und die organische Flüssigkeit werden vorzugsweise durch einen wässrigen Auszug bei saurem pH entfernt. Hierbei werden meist Säuren eingesetzt, die das Lösen des eingesetzten Salzes beschleunigen wie beispielsweise Salz-, Schwefel- oder Essigsäure. Es wird meist ein pH kleiner 3, bevorzugt 1 bis 2 eingestellt, oder in 1 bis 10 gew.-%iger Säure ausgerührt.
Für den Auszug können auch organische Lösemittel zugesetzt werden.
Der Auszug kann bei beliebiger Temperatur durchgeführt werden, solange das Medium flüssig bleibt, ggf. auch über dem Siedepunkt der Mischung. Da bevorzugt in wässrigem Medium gearbeitet wird, werden Temperaturen zwischen 0 und 100°C, insbesondere zwischen 60°C und Siedetemperatur gewählt.

Das nach dem erfindungsgemäßen Verfahren hergestellte Monoazopigment der Formel (I) in der beta-Kristallphase kann mit den üblichen Methoden isoliert werden, beispielsweise durch Filtrieren, Dekantieren oder Zentrifugieren. Bevorzugt wird filtriert. Lösemittel können auch durch Waschen entfernt werden. Das erfindungsgemäße Monoazopigment kommt vorzugsweise in getrockneter fester Form, in rieselfähiger, pulverförmiger Beschaffenheit oder als Granulat, aber auch als beispielsweise wässriger Presskuchen zum Einsatz.

Im erfindungsgemäßen feinteiligen Monoazopigment der Formel (I) können noch Spuren oder geringe Mengen des Monoazopigments der Formel (I) in der alpha-Kristallphase enthalten sein, es handelt sich aber um Anteile von unter 10 Gew.-%, bevorzugt unter 5 Gew.-%. Gewöhnlich erfolgt die Kristallphasenumwandlung durch das erfindungsgemäße Verfahren so vollständig, dass im Röntgenbeugungsdiagramm die alpha-Kristallphase nicht mehr sichtbar ist.

Bei der Salzknetung, beim Auszug, zum Presskuchen oder auch nach der Trocknung können weitere Hilfsmittel zugesetzt werden, wie beispielsweise Tenside, nichtpigmentäre und pigmentäre Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, Biocide, oder eine Kombination davon.

Als Tenside kommen anionische oder anionaktive, kationische oder kationaktive und nichtionische oder amphotere Substanzen oder Mischungen dieser Mittel in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben.

Mit pigmentären Dispergiermitteln sind an sich bekannte Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder sulfosäureestergruppenhaltige Pigmentdispergatoren, Ether- oder thioethergruppenhaltige Pigmentdispergatoren, oder Carbonsäure-, Carbonsäureester- oder carbonamidgruppenhaltige Pigmentdispergatoren. Bevorzugt werden solche Pigmentdispergatoren eingesetzt, die sich strukturell von organischen Pigmenten mit gelber Eigenfarbe als Grundkörper ableiten.

Im erfindungsgemäßen Verfahren können ein oder mehrere Pigmentdispergatoren in einer Gesamtmenge von 0,1 bis 25 Gew.-%, vorzugsweise 0,5 bis 20 Gew.-%, insbesondere 1,0 bis 17,5 Gew.-% bezogen auf das Gewicht des Monoazopigments eingesetzt werden.
Anionische Gruppen der als Hilfsmittel eingesetzten nichtpigmentären und pigmentären Dispergatoren, Tenside oder Harze können auch mit 1-, 2- oder 3-wertigen Ionen als Salze vorliegen, insbesondere verlackt, beispielsweise durch Ca-, Mg-, Ba-, Sr-, Mn- oder Al-lonen oder durch quaternäre Ammoniumionen. Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid.

Es war überraschend und nicht vorhersehbar, dass der Kristallmodifikationswechsel von alpha nach beta nicht nur durch den bekannten Lösemittelfinish bewirkt werden kann, sondern auch durch eine Salzknetung. Ebenso überraschend war, dass ein neues, feinteiliges Monoazopigment der Formel (I) in der beta-Kristallmodifikation mit bislang nicht bekannten Eigenschaften entsteht.
Das erfindungsgemäße Monoazopigment zeichnet sich durch hervorragende coloristische und rheologische Eigenschaften aus, insbesondere hohe Flockungsstabilität, leichte Dispergierbarkeit, gute Rheologie, hohe Farbstärke, Transparenz und Sättigung (Chroma). Es ist in vielen Anwendungsmedien leicht und bis zu hohen Feinheiten dispergierbar. Solche Pigmentdispersionen zeigen hervorragende rheologische Eigenschaften selbst bei hoher Pigmentierung der Lack- oder Druckfarbenkonzentrate. Auch andere Eigenschaften, wie beispielsweise Glanz, Überlackierechtheit, Lösemittelechtheit, Alkali- und Säureechtheit, Licht- und Wetterechtheiten und Reinheit des Farbtons, sind sehr gut.
Das erfindungsgemäße Monoazopigment lässt sich hervorragend in Farbfiltern einsetzen. Hier sorgt es für hohen Kontrast und genügt auch den sonstigen, beim Einsatz in Color Filtern gestellten Anforderungen, wie hohe Temperaturstabilität oder steile und schmale Absorptionsbanden. Ebenso geeignet ist es beispielsweise für Ink Jet Anwendungen durch seine hohe Farbstärke, durch die gute Lagerstabilität bei niedriger Viskosität der Inkjet-Tinte, die kein Verstopfen der Düsen und eine hohe Transparenz zeigt.

Das erfindungsgemäße Monoazopigment lässt sich zum Pigmentieren von hochmolekularen organischen Materialien natürlicher oder synthetischer Herkunft einsetzen, beispielsweise von Kunststoffen, Harzen, Lacken, Pulverlacken, Anstrichfarben, elektrophotographischen Tonern und Entwicklern, Elektretmaterialien, Farbfiltern sowie von Tinten, Druckfarben und Saatgut.

Hochmolekulare organische Materialien, die mit dem erfindungsgemäßen Monoazopigment pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, das erfindungsgemäße Monoazopigment als Blend oder in Form von Präparationen oder Dispersionen zu benutzen.

Gegenstand der vorliegenden Erfindung ist auch ein hochmolekulares organisches Material, enthaltend eine färberisch wirksame Menge des erfindungsgemäßen Monoazopigments der Formel (I) in der beta-Kristallphase. Bezogen auf das zu pigmentierende, hochmolekulare organische Material setzt man das erfindungsgemäße Monoazopigment meist in einer Menge von 0,01 bis 30 Gew.-%, vorzugsweise 0,1 bis 15 Gew.-%, ein.
Das erfindungsgemäße Monoazopigment ist auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren ist das erfindungsgemäße Monoazopigment geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Außerdem ist das erfindungsgemäße Monoazopigment als Farbmittel in Ink-Jet-Tinten auf wässriger und nichtwässriger Basis sowie in solchen Tinten, die nach dem Hot-Melt-Verfahren arbeiten, geeignet.
In den Ink-Jet-Tinten kann das erfindungsgemäße Monoazopigment auch mit anderen Farbmitteln wie beispielsweise anorganischen oder organischen Pigmenten und/oder Farbstoffen nuanciert sein. Es wird dabei in Tintensets, bestehend aus gelben, magenta, cyan und schwarzen Tinten, welche als Farbmittel Pigmente und/oder Farbstoffe enthalten, verwendet. Des Weiteren kann es in Tintensets verwendet werden, die zusätzlich eine oder mehrere der sogenannten "spot colors" in den Farben beispielsweise orange, grün, blau, golden und silber enthalten.
Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthron- oder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red 264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.
Zusätzlich können die Tintensets noch Nuancierfarbstoffe enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180.

Ink-Jet-Tinten enthalten im Allgemeinen insgesamt 0,5 bis 15 Gew.-%, vorzugsweise 1,5 bis 8 Gew.-%, (trocken gerechnet) des erfindungsgemäßen Monoazopigments.
Mikroemulsionstinten basieren auf organischen Lösemitteln, Wasser und ggf. einer zusätzlichen hydrotropen Substanz (Grenzflächenvermittler). Mikroemulsionstinten enthalten im Allgemeinen 0,5 bis 15 Gew.-%, vorzugsweise 1,5 bis 8 Gew.-%, des erfindungsgemäßen Monoazopigments, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 15 Gew.-% des erfindungsgemäßen Monoazopigments, 85 bis 99,5 Gew.-% mindestens eines organischen Lösemittels und/oder hydrotrope Verbindungen.
Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% des erfindungsgemäßen Monoazopigments. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

Weiterhin ist das erfindungsgemäße Monoazopigment auch als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können, sowie als Farbmittel für elektronische Tinten ("electronic inks" bzw. "e-inks") oder "electronic paper" ("e-paper") geeignet.
Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelatine, Caseine) auf die jeweiligen LCD-Bauteilen (z.B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Ganz besondere Anforderungen werden bei den Color Filter-Materialien an die eingesetzten Farbmittel gestellt.

Als wichtigste technische Parameter, die erfüllt sein müssen, lassen sich nennen:
- hohe Thermostabilität: während des Herstellvorganges eines Color Filters werden die einzelnen aufgetragenen Schichten erhitzt, so dass das Monoazopigment der Formel (I) in der beta-Kristallphase für bis zu 1 Stunde Temperaturen bis zu 300°C aushalten muss;
- gute Dispergierbarkeit in Color Filter Systemen;
- steile und schmale Absorptionsbanden der jeweils aufgebrachten Color Filter Schicht;
- hoher Kontrast;
- eine gute und stabile Viskosität im Color Filter Medium: Eine zu hohe Viskosität verhindert die gleichmäßige Verteilung der Flüssigkeit auf dem Glassubstrat und beeinträchtigt dadurch die Qualität des Bildes;
- ökotoxikologische Unbedenklichkeit beim Verarbeiten;
- nicht flokkulierendes Verhalten
- eine möglichst glatte (= nicht rauhe) Oberfläche der aufgebrachten (pigmentierten) Color Filter
- Säurebeständigkeit (für z.B. Etchingverfahren)
- Lösemittelechtheit.

Gegenstand der Erfindung ist auch ein Farbfilter, enthaltend das erfindungsgemäße Monoazopigment in einer färberisch wirksamen Menge.

Der gelbe Farbton des erfindungsgemäßen Monoazopigments ist gut geeignet zum Nuancieren, besonders der Rot- und Grünfarbtöne, des Color Filter Farbsets Rot-Grün-Blau(R,G,B). Diese drei Farben liegen als getrennte Farbpunkte nebeneinander vor, und ergeben von hinten durchleuchtet ein Vollfarbbild. Typische Farbmittel für den roten Farbpunkt sind Pyrrolopyrrol-, Chinacridon- und Azopigmente, wie z.B. P.R. 254, P.R. 209, P.R.175 und P.O. 38, einzeln oder gemischt.
Für den grünen Farbpunkt werden typischerweise Phthalocyaninfarbmittel eingesetzt, wie z.B. P.G.36 und P.G.7.
Für den blauen Farbpunkt werden typischerweise nicht oder nur niedrig halogenierte Phthalocyaninfarbmittel eingesetzt, wie z.B. P.B.15:6.
Bei Bedarf können den jeweiligen Farbpunkten noch weitere Farben zum Nuancieren zugemischt werden.

Zur Beurteilung der Eigenschaften der Pigmente auf dem Lacksektor in wasserfreien, lösemittelbasierenden Lacksystemen wurden aus der Vielzahl der bekannten Lacke ein Alkyd-Melaminharz-Lack auf Basis eines mittelöligen Alkydharzes und eines butanolveretherten Melaminharzes (AM) ausgewählt.

Die Bestimmung der coloristischen Eigenschaften erfolgte nach DIN 55986.
Die Bestimmung der Viskosität erfolgte nach dem Verdünnen des Mahlguts auf die Pigmentendkonzentration mit dem Viskospatel nach Rossmann, Typ 301 der Firma Erichsen.
In den folgenden Beispielen bedeuten Prozentangaben Gewichtsprozente und Teile Gewichtsteile, sofern nicht anders angegeben.

### Beispiel 1

187,5 g Monoazopigment der Formel (I) in der alpha-Kristallmodifikation, hergestellt entsprechend Beispiel 1 der EP-A-0 894 831, wobei nach der Synthese der gewonnene salzfrei gewaschene Presskuchen getrocknet wird und die Behandlung in N-Methylpyrrolidon entfällt, werden mit 1125 g micronisiertem Natriumchlorid und 330 ml Diethylenglykol 8 Stunden bei 85°C in einem Kneter mit Sigma-Schaufeln geknetet. Die Knetmasse wird in 8 Liter 5 gew.%iger Schwefelsäure 2 Stunden bei 40°C gerührt, die Suspension wird abgesaugt, der Presskuchen mit Wasser salzfrei gewaschen und bei 80°C getrocknet, das Granulat wird pulverisiert. Es werden 180 g Monoazopigment der Formel (I) in der beta-Kristallmodifikation erhalten. Im Röntgenpulverdiagramm ist keine alpha-Kristallmodifikation mehr erkennbar. 90 Gew.-% der Teilchen haben einen Stokes-äquivalenten Durchmesser kleiner gleich 93 nm.

### Vergleichsbeispiel 1

Wenn das Monoazopigment der Formel (I) in der beta-Kristallphase nach Beispiel 1 aus der EP-A-0 894 831 hergestellt wird, entsteht ein grobteiliges Monoazopigment; 90 Gew.-% der Teilchen haben einen Stokes-äquivalenten Durchmesser von kleiner gleich 347 nm.

### Beispiel 2

15 g Monoazopigment der Formel (I) in der alpha-Kristallmodifikation, hergestellt entsprechend Beispiel 1 der EP-A-0 894 831, wobei nach der Synthese der gewonnene salzfrei gewaschene Presskuchen getrocknet wird und die Behandlung in N-Methylpyrrolidon entfällt, werden mit 90 g micronisiertem Natriumchlorid und 35 ml Dimethylsulfoxid 2 Stunden bei 25°C in einem Kneter mit Sigma-Schaufeln geknetet.

Die Knetmasse wird in 8 Liter 5 gew.-%iger Schwefelsäure 2 Stunden bei 40°C gerührt, die Suspension wird abgesaugt, der Presskuchen mit Wasser salzfrei gewaschen und bei 80°C getrocknet, das Granulat wird pulverisiert.
Es werden 9 g Monoazopigment der Formel (I) in der beta-Kristallmodifikation erhalten. Im Röntgenpulverdiagramm ist keine alpha-Kristallmodifikation mehr erkennbar. 90 Gew.-% der Teilchen haben einen Stokes-äquivalenten Durchmesser kleiner gleich 127 nm.

Beschreibung der Meßmethode zur Bestimmung der Stokes-äquivalenten Teilchengrößen-Durchmesser:

Zur Bestimmung der Stokes-äquivalenten Teilchengrößen-Durchmesser werden die nachstehend beschriebenen Color Filter-Pasten verwendet. Die verdünnten Color Filter-Pasten werden nach üblichen Methoden für die Bestimmung der Teilchengrößenverteilung durch Photosedimentometrie (vgl. Herbst und Hunger, Industrial Organic Pigments, VCH 2004, pp. 31-33 und 37-41 und S. T. Fitzpatrick, Polymer News, 1999, Vol 24, No. 2, pp. 42-50) in der Scheibenzentrifuge DC24000 von CPS Instruments, Inc., Stuart, Florida 34997, USA, gemessen. Die Verdünnung und die Messung erfolgen mit bzw. in einem an die Color Filter-Pasten adaptierten organischen Medium. Die DC24000 wird mit einer Drehzahl von 20000 min⁻¹ betrieben. Nach Erreichen dieser Drehzahl wird das Spinfluid in die Scheibe eingefüllt. Im Spinfluid wird ein Dichtegradient erzeugt durch Zugabe von 10-25 %(v/v) Bis(3,5,5-trimethylhexyl)-phthalat in "CB". "CB" ist eine Mischung aus Cyclohexanon und n-Butylacetat (2:3 nach Gewicht). 0.1 ml der 1:100 mit "CB" verdünnten und 2 min in einem Ultraschallbad beschallten Color Filter-Pasten werden auf 13.8 ml Spinfluid aufgetragen. Gemessen wird die Extinktion von blauem Licht (Wellenlänge 470 nm), die auf der Streuung und Absorption der Teilchen beruht, die den Lichtstrahl nahe des äußeren Scheibenrandes durchqueren. Die Berechnung der Teilchengrößenverteilung nach Volumenanteilen erfolgt durch die Messgeräte-Software von CPS mit Hilfe der Mie-Theorie. Hierzu wird der komplexe Brechungsindex des Pigments benötigt. Dieser wurde durch Ellipsometrie an gepressten Tabletten des Pigmentpulvers bestimmt. Die ebenso benötigte Dichte der Pigmentteilchen wurde mit einem Helium-Gas-Pyknometer (AccuPyc 1330 von Micromeritics) bestimmt. Die Zentrifuge wird unmittelbar vor jeder Messung einer Probe mit einem Partikelgrößen-Standard kalibriert. Als Standard wurde monokristallines Diamantpulver verwendet (mittlere Teilchengröße 0.52 µm, sehr enge Teilchengrößenverteilung).

### Anwendungsbeispiel 1

Im AM-System werden mit dem gemäß Beispiel 1 hergestellten Monoazopigment farbstarke, transparente, grünstichig-gelbe Lackierungen erhalten. Die Viskosität des Lacks ist niedrig, der Glanz ist hoch. Im Vergleich zu einem Pigment, welches gemäß EP-A-0 894 831, Beispiel 1 hergestellt worden ist, ist die Farbstärke wesentlich höher und der Vollton wesentlich transparenter.

### Anwendungsbeispiel 2

### Prüfmethode für Color-Filter

### Herstellung eines Test-Color Filters:

Es wird zunächst eine Color Filter-Paste hergestellt, die aus Pigmentzusammensetzung, Bindemittel, Lösemittel und Dispergierhilfsmittel nach folgender Rezeptur besteht:

| | |
|---|---|
| 77 Gew.-% | 1-Methoxy-2-propylacetat |
| 10 Gew.-% | Styrolacrylpolymer |
| 10 Gew.-% | Pigment; und |
| 3 Gew.-% | Dispergierhilfsmittel. |

Die vorstehende Mischung wird mit Zirkonkugeln (0 0,5-0,7 mm) in einem Paint Shaker für 2 Stunden dispergiert. Die Dispersion wird anschließend filtriert. Die dabei erhaltene Color Filter-Paste wird auf ein Glassubstrat mittels Spin Coater aufgetragen, um einen Color Filter-Film zu erzeugen. Die Transparenz, coloristische Werte, Hitzestabilität und der Kontrast werden an diesem Color Filter-Film bestimmt.
Die Transmission des beschichteten Glassubstrates wird spektrophotometrisch im Anwendungsbereich von 400-700 nm ermittelt. Die coloristischen Werte werden mit dem CIE Farbdreieck (xyY Werte) beschrieben: x beschreibt dabei die blaurot Achse, y die blau-grün Achse, Y die Brillanz.

Die Viskosität wird an der oben beschriebenen Color Filter-Paste mit einem Rotationsviskosimeter bei einer Temperatur von 23°C ± 0,5°C und bei einer Schergeschwindigkeit von 60s⁻¹ ermittelt.

Die Hitzestabilität wird durch den delta E Wert beschrieben; der delta E Wert wird nach DIN 6174 bestimmt, er beschreibt den Gesamtfarbabstand und lässt sich aus den x, y, Y Werten errechnen. Das beschichtete Glassubstrat wird nach Messung der Transmission bei 80°C für 10min temperiert. Anschließend werden die Transmission gemessen und das delta E berechnet. Das beschichtete Glassubstrat wird nun bei 250°C für 1 h temperiert und wiederum ein delta E Wert ermittelt. Außerdem wird mit der Color Filter-Paste eine Vollton-Lackierung und nach Verdünnen mit einer Weiß-Paste eine so genannte Aufhellungslackierung durch Rakelung angefertigt, deren Coloristiken beurteilt werden. Prüfung für Color Filter mit dem Pigment hergestellt gemäß Beispiel 1:
Es wird eine Color Filter-Paste hergestellt. Die Viskosität der Color Filter-Paste beträgt: η = 7 mPa.s.
Anschließend werden 3 mL von der Color Filter-Paste pipettiert und auf ein Glassubstrat mittels Spin Coater bei einer Drehgeschwindigkeit von 2500 rpm während 20s aufgetragen. Die coloristischen Eigenschaften des Color Filter-Films werden anschließend spektrophotometrisch bestimmt.

### Coloristische Werte:

| x | y | Y |
|---|---|---|
| 0,389 | 0,448 | 83,56 |

### Transmissionswerte:

| | | | | | | |
|---|---|---|---|---|---|---|
| Wellenlänge | 400 nm | 410 nm | 420 nm | 430 nm | 440 nm | 450 nm |
| Transmission (%) | 2,5 | 3,6 | 5,7 | 9,2 | 14,4 | 22,0 |
| Wellenlänge | 460 nm | 470 nm | 480 nm | 490 nm | 500 nm | |
| Transmission (%) | 32,7 | 43,4 | 56,5 | 68,3 | 77,2 | |
| Wellenlänge | 510 nm | 520 nm | 530 nm | 540 nm | 550 nm | 560 nm |
| Transmission (%) | 82,9 | 86,2 | 88,1 | 89,2 | 89,7 | 89,7 |
| Wellenlänge | 570 nm | 580 nm | 590 nm | 600 nm | 610 nm | |
| Transmission (%) | 89,5 | 89,2 | 89 | 88,8 | 88,8 | |
| Wellenlänge | 620 nm | 630 nm | 640 nm | 650 nm | 660 nm | 670 nm |
| Transmission (%) | 88,9 | 89 | 89,4 | 89,8 | 90,3 | 90,7 |
| Wellenlänge | 680 nm | 690 nm | 700 nm | | | |
| Transmission (%) | 91,0 | 91,2 | 91,3 | | | |

Die Hitzestabilität ist gut.

Die Lackierungen zeigen hohe Transparenz und Farbstärke und einen reinen Farbton.

### Anwendungsbeispiel 3

### Herstellung von Farbmittelpräparationen für den Inkjet-Druck:

Das Pigment wird zusammen mit den nachstehend genannten Dispergiermitteln, dem organischen Lösemittel und den anderen Zusätzen in entionisiertem Wasser angeteigt und dann mit einem Dissolver homogenisiert und vordispergiert. Die anschließende Feindispergierung erfolgt mit Hilfe einer Perlmühle, wobei die Mahlung unter Kühlung bis zur gewünschten Teilchengrößenverteilung der Pigmentpartikel erfolgte. Im Anschluss wird die Dispersion mit entionisiertem Wasser auf die gewünschte Pigmentendkonzentration eingestellt.

Die im folgenden Beispiel beschriebene Farbmittelpräparation wurde nach dem zuvor beschriebenen Verfahren hergestellt, wobei die folgenden Bestandteile in den angegebenen Mengen so verwendet wurden, dass 100 Teile der Farbmittelpräparation entstehen und Teile Gewichtsteile bedeuten.

### Farbmittelpräparation 1 für Inkjet:

| | |
|---|---|
| 20 Teile | Pigment, hergestellt gemäß Beispiel 1 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Prüfung der drucktechnischen Eigenschaften der Farbmittelzubereitung:

Um die drucktechnischen Eigenschaften zu beurteilen, wurde aus der obigen Farbmittelpräparation 1 eine Testtinte hergestellt und deren Verdruckbarkeit mit einem thermischen Ink-Jet-Drucker untersucht.

Für die Herstellung der Testtinte wurde die Farbmittelpräparation 1 zunächst über einen 1 µm-Filter feinfiltriert, um Mahlkörperabrieb und eventuelle Grobanteile abzutrennen. Danach wurde die filtrierte Farbmittelpräparation mit Wasser verdünnt und mit weiteren niedermolekularen Alkoholen und Polyolen versetzt, wobei der Pigmentgehalt auf 5 Gew.-% bezogen auf die Tinte (100 Gew.-%) eingestellt wurde.
Mit dem Drucker HP 960C (Hewlett Packard) wurden Testbilder auf handelsübliche Normalpapiere (Kopierpapiere) und Spezialpapiere (Premium Qualität) der Firma Hewlett Packard gedruckt. Die Beurteilung bzgl. Qualität und Güte des Druckbildes erfolgte durch visuelle Betrachtung.

Die aus der Farbmittelpräparation 1 hergestellte Testtinte zeigte dabei ein sehr gutes Druckverhalten. Insbesondere ergaben sich eine hohe Zuverlässigkeit der Testtinte im Druckverlauf (sehr gutes Andruckverhalten, keine Düsenverstopfung) und ein sehr gleichmäßiges Druckbild von exzellenter Qualität auf den verschiedenen verwendeten Papieren.

## Patentansprüche

1. Feinteiliges Monoazopigment der Formel (I) in der beta-Kristallphase, 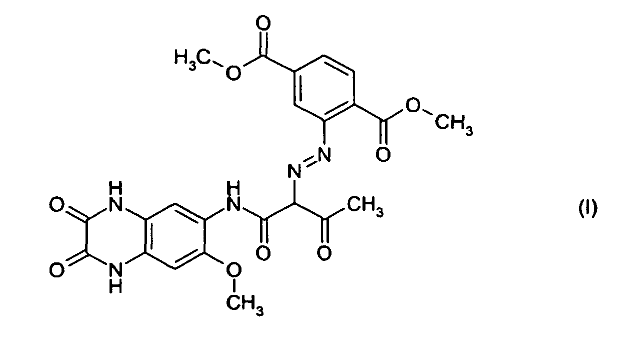 **dadurch gekennzeichnet, dass** mindestens 90 Gew.-% der Teilchen einen Stokes-äquivalenten Durchmesser von kleiner gleich 130 nm aufweisen.

2. Monoazopigment nach Anspruch 1, **dadurch gekennzeichnet, dass** mindestens 90 Gew.-% der Teilchen einen Stokes-äquivalenten Durchmesser von kleiner gleich 100 nm aufweisen.

3. Monoazopigment nach Anspruch 1 oder 2, **dadurch gekennzeichnet, dass** das Kontrastverhältnis C = Ys/Yw kleiner gleich 0,22 ist.

4. Monoazopigment nach einem oder mehreren der Ansprüche 1 bis 3, **dadurch gekennzeichnet, dass** das Kontrastverhältnis C = Ys/Yw kleiner gleich 0,20 ist.

5. Verfahren zur Herstellung eines Monoazopigments nach einem oder mehreren der Ansprüche 1 bis 4, **dadurch gekennzeichnet, dass** ein Monoazopigment der Formel (I) in der alpha-Kristallphase einer Salzknetung unterworfen wird.

6. Verfahren nach Anspruch 5, **dadurch gekennzeichnet, dass** das Monoazopigment der Formel (I) in der alpha-Kristallphase mit einer organischen Flüssigkeit und mit einem kristallinen Salz in Form einer knetbaren, hochviskosen Paste geknetet wird.

7. Verfahren nach Anspruch 6, **dadurch gekennzeichnet, dass** die organische Flüssigkeit aus der Gruppe der Glykole, Glykolether, Dimethylformamid, N-Methylpyrrolidon und Dimethylsulfoxid ausgewählt ist.

8. Verfahren nach Anspruch 6 oder 7, **dadurch gekennzeichnet, dass** die organische Flüssigkeit Diethylenglykol ist.

9. Verwendung eines Monoazopigments nach einem oder mehreren der Ansprüche 1 bis 4 zum Pigmentieren von hochmolekularen organischen Materialien natürlicher oder synthetischer Herkunft, sowie von elektrophotographischen Tonern und Entwicklern, Elektretmaterialien, Farbfiltern, Tinten, Druckfarben und Saatgut.

10. Hochmolekulares organisches Material, enthaltend eine färberisch wirksame Menge des Monoazopigments nach einem oder mehreren der Ansprüche 1 bis 4.

11. Farbfilter, enthaltend eine färberisch wirksame Menge des Monoazopigments nach einem oder mehreren der Ansprüche 1 bis 4.

## Claims

1. A finely divided monoazo pigment of the formula (I) in the beta crystal phase, 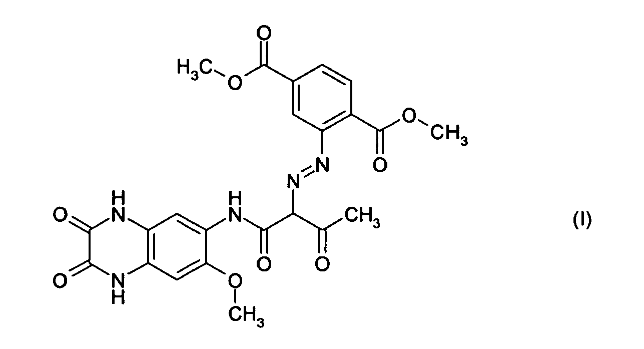 wherein at least 90% by weight of the particles have a Stokes-equivalent diameter of less than or equal to 130 nm.

2. The monoazo pigment as claimed in claim 1, wherein at least 90% by weight of the particles have a Stokes-equivalent diameter of less than or equal to 100 nm.

3. The monoazo pigment as claimed in claim 1 or 2, wherein the contrast ratio C = Yb/Yw is less than or equal to 0.22.

4. The monoazo pigment as claimed in one or more of claims 1 to 3, wherein the contrast ratio C = Yb/Yw is less than or equal to 0.20.

5. A process for producing a monoazo pigment as claimed in one or more of claims 1 to 4, which comprises subjecting a monoazo pigment of the formula (I) in the alpha crystal phase to salt kneading.

6. The process as claimed in claim 5, wherein the monoazo pigment of the formula (I) in the alpha crystal phase is kneaded with an organic liquid and with a crystalline salt in the form of a kneadable paste of high viscosity.

7. The process as claimed in claim 6, wherein the organic liquid is selected from the group consisting of glycol, glycol ether, dimethylformamide, N-methylpyrrolidone and dimethyl sulfoxide.

8. The process as claimed in claim 6 or 7, wherein the organic liquid is diethylene glycol.

9. The use of a monoazo pigment as claimed in one or more of claims 1 to 4 for pigmenting high molecular mass organic materials of natural or synthetic origin, electrophotographic toners and developers, electret materials, color filters, inks, including printing inks, and seed.

10. A high molecular mass organic material comprising a coloringly effective amount of the monoazo pigment as claimed in one or more of claims 1 to 4.

11. A color filter comprising a coloringly effective amount of the monoazo pigment as claimed in one or more of claims 1 to 4.

## Revendications

1. Pigment monoazo finement divisé de formule (I) dans la phase cristalline bêta, 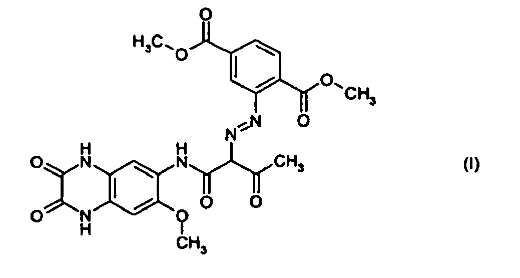 **caractérisé en ce qu'**au moins 90% en poids des particules présentent un diamètre équivalent de Stokes inférieur à 130 nm.

2. Pigment monoazo selon la revendication 1, **caractérisé en ce qu'**au moins 90% en poids des particules présentent un diamètre équivalent de Stokes inférieur à 100 nm.

3. Pigment monoazo selon la revendication 1 ou 2, **caractérisé en ce que** le rapport de contraste C = Ys/Yw est inférieur à 0,22.

4. Pigment monoazo selon l'une ou plusieurs des revendications 1 à 3, **caractérisé en ce que** le rapport de contraste C = Ys/Yw est inférieur à 0,20.

5. Procédé pour la préparation d'un pigment monoazo selon l'une ou plusieurs des revendications 1 à 4, **caractérisé en ce qu'**un pigment monoazo de formule (I) dans la phase cristalline alpha est soumis à un malaxage dans un sel.

6. Procédé selon la revendication 5, **caractérisé en ce que** le pigment monoazo de formule (I) dans la phase cristalline alpha est malaxé avec un liquide organique et un sel cristallin sous forme d'une pâte malaxable, hautement visqueuse.

7. Procédé selon la revendication 6, **caractérisé en ce que** le liquide organique est choisi dans le groupe des glycols, des glycoléthers, du diméthylformamide, de la N-méthylpyrrolidone et du diméthylsulfoxyde.

8. Procédé selon la revendication 6 ou 7, **caractérisé en ce que** le liquide organique est le diéthylèneglycol.

9. Utilisation d'un pigment monoazo selon l'une ou plusieurs des revendications 1 à 4 pour la pigmentation de matériaux organiques de haut poids moléculaire d'origine naturelle ou synthétique, ainsi que de toners et de révélateurs électrophotographiques, de matériaux pour électret, de filtres couleur, d'encres, d'encres d'imprimerie et de graines.

10. Matériau organique de haut poids moléculaire, contenant une quantité active en coloration du pigment monoazo selon l'une ou plusieurs des revendications 1 à 4.

11. Filtre couleur, contenant une quantité active en coloration du pigment monoazo selon l'une ou plusieurs des revendications 1 à 4.
